# EUROPEAN PATENT APPLICATION

(11) **EP 1 634 896 A1**
(43) Date of publication of application: **15.03.2006**
(21) Application number: 04021607.9
(22) Date of filing: 10.09.2004
(51) Int. Cl.: C08F 210/02, C08L 23/04, C08L 23/06, C08L 23/08, C08K 3/04, H01B 1/24, H01B 3/44

(54) **Polymer composition**

(71) Applicant: Borealis Technology Oy, 06101 Porvoo (FI)
(72) Inventor: Broman, Claes, 441 96 Ödsmal (SE); Nilsson, Ulf, 444 41 Stenungsund (SE); Gustavsson, Karin, 472 32 Svanesund (SE); Wald, Detlef, 2000 Antwerpen (BE); Lindbom, Lena, 442 90 Kungälv (SE); Nylander, Perry, 412 61 Göteborg (SE); Persson, Magnus, 461 57 Trollhättan (SE)
(74) Representative: Kador & Partner

(57) **Abstract**

The present invention relates to a composition for an electronic power cable. The composition comprises a polyolefin polymer compound, and poly-2,2,4-trimethyl-1,2-dihydroquinoline as an antioxidant wherein the same contains less than 200 ppm NaCl.

## Description

The present invention relates to a composition for an electric power cable which comprises a polymer and TMQ (poly-2,2,4-trimethyl-1,2-dihydroquinoline), as an antioxidant, and uses thereof.

Typical power cables generally comprise one or more conductors in a cable core which is surrounded by one or more layers of polymeric materials. The polymeric material usually comprises an antioxidant, which prevents degradation of the polymer composition.

The insulated cables are known to suffer from a reduced life span when stored in an environment where the insulation is exposed to water, for example, in underground or high-humidity locations. The reduced life span has been attributed to the formation of "water trees", which occur when an organic polymer material is subjected to an electric field over a long period of time in the presence of water.

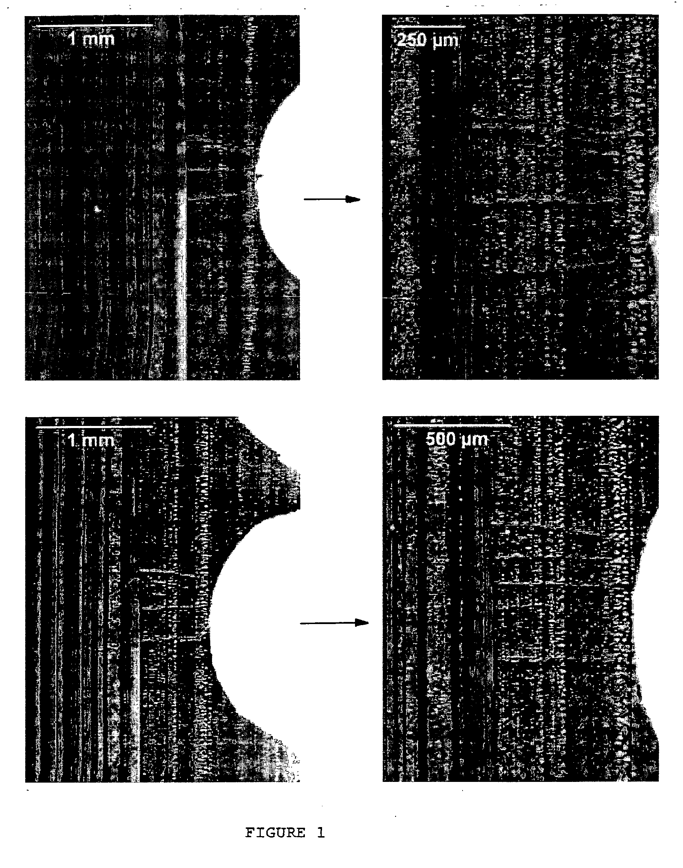

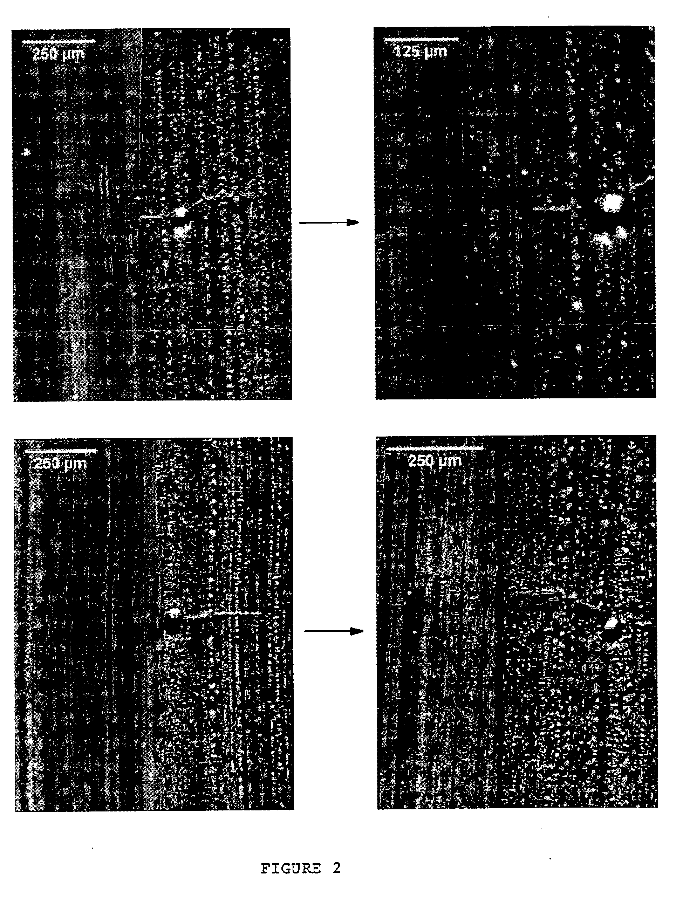

More specifically, water trees are tree or bush-like structures in the insulation layers which originate from porous channels in a semiconducting layer (see Figure 1) or a contaminant in the insulation (known as bow-tie trees) (see Figure 2, where the contaminant is the sphere like structure). The vented trees are considered to be a severe problem.

The consequence of the trees is a decrease in di-electrical strength, which means that an electrical break down can occur through the insulation during use.

Much has been written about the mechanism for tree growth, however, no proposed mechanism has been found to be correct. It is believed that the formation of trees is caused by a complex interaction between the electrical field, moisture, oxidation of the polymer layer, and mechanical stress.

In order to reduce oxidation of the polymer composition, antioxidants, such as TMQ, are added. However, the addition of such antioxidants to the semiconducting composition does in fact lead to an increase in the formation of porous channels that, when growing towards an insulation layer, will eventually cause an increased number of water trees. Unfortunately though, the antioxidants are necessary in order to obtain the necessary balance of properties produced by the polymer composition.

TMQ is the most frequently used antioxidant in rubber and for power cable applications. It is produced using hydrochloric acid (HCl) as a catalyst. At a later step during the formation process, sodium hydroxide (NaOH) is added to neutralise the compound which, accordingly, leads to the formation of NaCl. The compound is then subject to extraction with water to provide TMQ. In most applications, the presence of NaCl is not a problem, but is in semiconducting compositions due to the presence of strong electrical fields.

It has been found by the inventors of the present invention that the TMQ produced, as a result of the production process used, contains a relatively high concentration of sodium chloride (NaCl).

Surprisingly it has been found by the inventors of the present invention, that a reduction in the concentration of NaCl in the TMQ causes a reduction in formation of porous channels and thus a reduction in water tree formation.

Therefore, according to the present invention, there is provided a polymer composition for use in a power cable comprising a polyolefin polymer and TMQ (poly-2,2,4-trimethyl-1,2- dihydroquinoline) as an antioxidant, and characterized in that the TMQ contains less than 200 ppm sodium chloride.

Preferably, the TMQ contains less than 150 ppm sodium chloride.

The polyolefin polymer is, preferably an ethylene polymer. The polymer may have a multimodal, preferably a bimodal, molecular weight distribution.

The composition may comprise carbon black. Where the composition comprises carbon black, the carbon black is preferably furnace black. The furnace black may be present in an amount of 20 to 40 wt%.

The composition may also comprise a polar copolymer. Polar groups are defined to be functional groups which comprise at least one element other than carbon and hydrogen.

Still more preferably, the polar copolymer comprises a copolymer of an olefin, preferably ethylene, with one or more comonomers selected from C₁ to C₆-alkyl acrylates, C₁ to C₆-alkyl metacrylates, acrylic acids, metacrylic acids and vinyl acetate. The copolymer may also contain ionomeric structures (like in e.g. DuPont's Surlyn types).

Yet more preferably, the polar polymer comprises a copolymer of ethylene with C₁- to C₄-alkyl, such as methyl, ethyl, propyl or butyl, acrylates or vinylacetate.

It is particularly preferable that the polar polymer comprise a copolymer of an olefin, preferably ethylene, with an acrylic copolymer, such as ethylene acrylic acid copolymer.

In addition to ethylene and the defined comonomers, the copolymers may also contain further monomers. For example, the copolymers may contain up to 10% by weight of an olefin such as propylene.

The polar copolymer may be produced by copolymerisation of the polymer, e.g. olefin monomers with polar comonomers, and may also be grafted, e.g. a polyolefin in which one or more of the comonomers is grafted onto the polymer backbone, for example, acrylic acid-grafted polyethylene.

Preferably, the polar copolymer is an olefin-acrylate and/or a silane and/or vinyl-acrylate. The polar comonomer may be selected from one or more ethylene-acetate, olefin-acetate, preferably ethylene-acetate, ethylene-butyl-acrylate, ethylene-ethyl-acrylate, ethylene-methyl-acrylate, vinyltri-methoxy silane and vinyltri-ethoxysilane.

The compositions of the present invention may be crosslinked with a silane or a peroxide.

Also in accordance with the present invention, the compositions of the present invention may be used as a semiconducting composition.

The present invention is also directed to an electric power cable comprising a conductor, and a semiconducting layer comprising a composition as described above. Preferably, the semiconducting layer is the inner most layer, which is most vulnerable to "water trees".

It will also be appreciated that the cable may comprise one or more semiconducting layers.

The electric power cable may be a medium voltage power cable. A standard construction is usually a conductor with an inner semiconducting layer, an insulation layer, an outer semiconducting layer and a protecting jacketing layer. Additional layers can also be used.

The present invention will now be described in further detail, and with reference to Examples 1 to 7.

The expression "modality of a polymer" refers to the form of its molecular weight distribution (MWD) curve, i.e. the appearance of the graph of the polymer weight fraction as a function of its molecular weight. If the polymer is produced in a sequential step process e.g. by utilising reactors coupled in series, and using different conditions in each reactor, the different polymer fractions produced in the different reactors will each have their own molecular weight distribution which may considerably differ from one another.

The molecular weight distribution curve of the resulting final polymer can be looked at by superimposing of the molecular weight distribution curves of the polymer fractions which will accordingly show two or more distinct maxima, or at least be distinctly broadened compared with the curves for the individual fractions. A polymer showing such a molecular weight distribution curve is called "bimodal" or "multimodal", respectively.

The multimodal ethylene is preferably a bimodal polyethylene.

Multimodal polymers can be produced according to several processes which are described e.g. in WO 92/12182 and WO 93/08222.

The multimodal polyethylene is preferably produced in a multi-stage process in a multi-step reaction sequence such as described in WO 92/12182. The contents of this document are included herein by reference.

It is previously known to produce multimodal, in particular bimodal, olefin polymers, such as multimodal polyethylene, in two or more reactors connected in series. As instance of this prior art, mention may be made of WO 96/18662, which is hereby incorporated by way of reference as regards the production of multimodal polymers.

According to the present invention, the main polymerisation stages are preferably carried out as a combination of slurry polymerisation/gas-phase polymerisation. The slurry polymerisation is preferably performed in a so-called loop reactor.

In order to produce the inventive composition of improved properties, a flexible method is required. For that reason, it is preferred that the composition be produced in two main polymerisation stages in a combination of loop reactor/gas-phase reactor.

Optionally and advantageously, the main polymerisation stages may be preceded by a prepolymerisation, in which case up to 20% by weight, preferably 1-10% by weight, more preferably 1-5% by weight, of the total amount of polymer is produced. The prepolymer is preferably an ethylene homopolymer (HDPE). At the prepolymerisation point, all of the catalyst is preferably charged into a loop reactor and the prepolymerisation is performed as a slurry polymerisation. Such a prepolymerisation leads to less fine particles being produced in the following reactors and to a more homogeneous product being obtained in the end.

Generally, the technique results in a multimodal polymer mixture through polymerisation with the aid of a Ziegler-Natta or metallocene catalyst in several successive polymerisation reactors. In the production of, for example, a bimodal polyethylene, which according to the invention is the preferred polymer, a first ethylene polymer is produced in a first reactor under certain conditions with respect to hydrogen-gas concentration, temperature, pressure, and so forth. After the polymerisation in the first reactor, the polymer including the catalyst is separated from the reaction mixture and transferred to a second reactor, where further polymerisation takes place under other conditions.

Usually, a first polymer of high melt flow rate and low molecular weight, LMW, is produced with no addition of comonomer in the first reactor, whereas a second polymer of low melt flow rate and high molecular weight, HMW, is produced with addition of comonomer in the second reactor. As comonomer of the HMW fraction preferably one or more alpha-olefins are used. More preferably, alpha-olefins with 6-12 carbon atoms are used, which may be preferably selected from the group consisting of 1-hexene, 4-methyl-1-pentene, 1-heptene, 1-octene and 1-nonene, 1-decene, 6-methyl-1-heptene, 4-ethyl-1-hexene, 6-ethyl-1-octene and 7-methyl-1-octene. Still more preferably, the comonomer is an alpha olefin with 8-10 carbons, and my be selected from 1-octene, 1-nonene, 1-decene, 6-methyl-1-heptene, 4-ethyl-1-hexene, 6-ethyl-1-octene and 7-methyl-1-octene .

The amount of comonomer is preferably such that it comprises 0.1 to 2.0 mol%, more preferably 0.1 to 1.0 mol% of the multimodal polyethylene. The resulting end product consists of an intimate mixture of the polymers from the two reactors, the different molecular-weight-distribution curves of these polymers together forming a molecular-weight-distribution curve having a broad maximum or two maxima, i.e. the end product is a bimodal polymer mixture. Since multimodal, and especially bimodal, ethylene polymers, and the production thereof belong to the prior art, no detailed description is called for here, but reference is made to the above mentioned EP 517 868. It will be noted that the order of the reaction stages may be reversed.

Preferably, as stated above, the multimodal polyethylene composition according to the invention is a bimodal polymer mixture. It is also preferred that this bimodal polymer mixture has been produced by polymerisation as above under different polymerisation conditions in two or more polymerisation reactors connected in series.

In a preferred embodiment of the polymerisation in a loop reactor followed by a gas-phase reactor, the polymerisation temperature in the loop reactor is preferably 92 to 98°C, more preferably about 95°C, and the temperature in the gas-phase reactor preferably is 75 to 90°C, more preferably 82 to 90°C.

A chain-transfer agent, preferably hydrogen, is added as required to the reactors, and preferably 200 to 800 moles of H₂/kmoles of ethylene are added to the reactor, when the LMW fraction is produced in this reactor, and 0 to 50 moles of H₂/kmoles of ethylene are added to the gas phase reactor when the reactor is producing the HMW fraction.

As indicated earlier, the catalyst for polymerising the multimodal polyethylene of the invention preferably is a Ziegler-Natta type catalyst. Particularly preferred are catalysts with a high overall activity as well as a good activity balance over a wide range of hydrogen partial pressures. Furthermore, the molecular weight of the polymer produced by the catalyst is of great importance.
As an example of a preferred catalyst, mention is made of the catalyst disclosed in FI 980788 and its corresponding PCT application PCT/FI99/00286. It has surprisingly been found that when using this catalyst in a multistage process, it is possible to obtain a polymer having the characteristics described above. The catalyst also has the advantage that it (procatalyst and cocatalyst) only needs to and, indeed, only should be added in the first polymerisation reactor.

FI 980788 and its corresponding PCT application PCT/F199/00286 dicloses a process for the production of a high activity procatalyst.

The catalyst for the production of the ethylene polymer may also be a chromium, or a single-site catalyst.

Preferably, the single-site catalyst is a metallocene catalyst.

Preferred single-site catalysts are described in EP 688 794, EP 949 274, WO 95/12622 and WO 00/34341. The contents of these documents are included herein by reference.

Multimodal polymers, in particular ethylene polymers, show superior mechanical properties, which are, for example, low shrinkage, low abrasion, hard surface and good barrier properties by a good processability.

The multimodal polyethylene comprises a low molecular weight (LMW) ethylene homopolymer fraction and a high molecular weight (HMW) ethylene homo- or copolymer fraction. Depending on whether the multimodal ethylene polymer is bimodal or has a higher modality, the LMW and/or HMW fraction may comprise only one fraction each or two or more sub-fractions.

The low molecular weight (LMW) fraction has a weight average molecular weight of about 5000 to 50000 g/mol, a melt index MFR₂ of about 100 to 2000 g/10 min, a content of alpha-olefin comonomer of less than about 0.5 % by mole and a density of about 965 to 977 kg/m³.

The high molecular weight (HMW) fraction has a weight average molecular weight of about 300000 to 900000 g/mol, a melt index MFR₂₁ of about 0.01 to 1 g/10 min, a content of comonomer of 0.4 to 4.0 % by mol and a density of about 915 to 935 kg/m³.

The expression "ethylene homopolymer" as used herein refers to an polyethylene that consists substantially, i.e. to at least 97 % by weight, preferably at least 99 % by weight, more preferably at least 99.5 % by weight and most preferably at least 99.8 % by weight of ethylene.

Preferably, the ethylene polymer is a bimodal polymer consisting of one LMW fraction and one HMW fraction.

As stated above, the co-monomer of the high molecular weight copolymer preferably is a C₆ to C₁₂ alpha-olefin, more preferably a C₈ to C₁₀ alpha-olefin.

The molecular weight distribution is measured by using the size exclusion chromatography (SEC). In the examples this was done by using a Waters 150 CV plus no. 1115. A refractive index (RI) detector and a viscosity detector were used. The instrument was calibrated with a narrow molecular weight distribution polystyrene sample. The columns were 3 HT6E styragel from Waters at an oven temperature of 140°C.

### Examples and Procedure:

40% by weight of furnace black and 0,65% by weight TMQ with various amounts of NaCl (see table) was mixed into an ethylene-butyl acrylate copolymer (EBA) in a standard melt compounding apparatus. The ethylene-butyl acrylate copolymer made in the same high-pressure process as low-density polyethylene (LDPE) has a butyl acrylate content of 17%. About 1% by weight peroxide was added in a second step by mixing the peroxide with the mixture at a temperature above the peroxide melting point but below the compound melting point until the pellets were covered evenly by the peroxide.

The detection of trees is measured using a "sandwich" method. For production of the sandwich samples a plate with a thickness of 3 mm is first formed out of the insulating compound by way of thermoplastic forming. After that, and without the use of a moulding frame, a film with a thickness of about 200µm is produced by thermoplastic forming on a conducting layer material, which optionally has been impurified in a defined way. From this film disks are punched out with a punching iron and are placed on both sides of the plate of insulating compound so that pairs of conducting layer disks are standing opposite to each other as exact as possible. The arrangement (configuration) is again introduced into the plate press, warmed up and cross linked.

To obtain a standardized intitial state concerning the content of cross linking fragments such as acetophenane or amyl alcohol, which possibly may influence the aging process, the plate, like all other samples, is conditioned in an circulating oven at 70°C for 120h.

The plate shows a relief on its surface due to its partial adhesion to the separating films. This relief is removed after conditioning by short-term warming to 130°C. After cooling to room temperature, the sandwich samples are punched out of the plate and are mounted in/on a testing vessel.
The testing vessel is then inserted into a metal block thermostate, where the samples may be aged under influence of electric field electrolyte and temperature.

The voids in the semiconducting layer may then be counted.

Figure 2 shows that porous channels start growing from voids in the semiconducting layer and eventually lead to trees in the insulation layer. The number of these voids can be counted (see table). Table 1 shows that the composition with a TMQ containing a high amount of NaCl has a considerably higher number of voids.

**Table 1**

| Example | TMQ content | NaCl content in the TMQ (ppm) | Voids in the semicon layer without porous channels | Voids in the semicon layer with porous channels |
|---|---|---|---|---|
| 1 | 0,65 | <20 | 0 | 0 |
| 2 | 0,65 | 66 | 3 | 4 |
| 3 | 0,65 | 23 | 0 | 4 |
| 4 | 0,65 | 89 | 0 | 0 |
| 5 | 0,65 | <10 | 0 | 0 |
| 6 | 0,65 | 500 | 0 | 47 |
| 7 | 0,65 | <50 | 0 | 0 |

## Claims

1. A semiconducting composition for use in power cables comprising a polyolefin polymer compound, and TMQ (poly-2,2,4-trimethyl-1,2-dihydroquinoline) as an antioxidant, and wherein the TMQ contains less than 200 ppm NaCl.

2. A semiconducting composition according to claim 1, wherein the TMQ contains less than 150 ppm NaCl, preferably 100 ppm.

3. A semiconducting composition according to any one of the preceding claims, wherein the polyolefin polymer is polyethylene.

4. A semiconducting composition according to any one of the preceding claims, wherein the composition further comprises a polar copolymer.

5. A semiconducting composition according to claim 4, wherein the polar copolymer comprises a copolymer of an olefin, preferably ethylene, with one or more comonomers selected from C₁ to C₆-alkyl acrylates, C₁ to C₆₋alkyl metacrylates, acrylic acids, metacrylic acids and vinyl acetate.

6. A semiconducting composition according to claim 5, wherein the polar copolymer is an olefin-acrylate copolymer and/or a silane copolymer and/or a vinyl-acetate.

7. A semiconducting composition according to claim 6, wherein the olefin-acrylate copolymer is an ethylene-butyl-acrylate and/or ethylene-ethyl-acrylate and/or ethylene-methyl-acrylate.

8. A semiconducting composition according to claim 6, wherein the silane copolymer comprises a vinyltri-methoxysilane and/or vinyltri-ethoxysilane.

9. A semiconducting composition according to any one of the preceding claims, wherein the polymer is a multimodal polymer.

10. A semiconducting composition according to claim 9, wherein the multimodal polymer is a bimodal polymer.

11. A semiconducting composition according to any one of the preceding claims, comprising carbon black.

12. A semiconducting composition according to claim 11, wherein the carbon black is furnace black.

13. A semiconducting composition according to claim 11, wherein the composition comprises 20 to 40 wt% carbon black.

14. A semiconducting composition according to any one of the preceding claims, wherein the composition is crosslinked with a silane or peroxide.

15. An electric power cable comprising a conductor, and a semiconducting layer according to any one of claims 1 to 14.

16. An electric power cable according to claim 15, wherein the semiconducting layer is an inner most semiconducting layer.

17. An electric cable according to claim 16, wherein the cable further comprises one or more semiconducting layers.
